(19)

Europäisches
Patentamt
European
Patent Office
Office européen
des brevets

(11) **EP 2 629 446 A1**

(12) **EUROPEAN PATENT APPLICATION**

(43) Date of publication:
**21.08.2013 Bulletin 2013/34**

(51) Int Cl.:
**H04L 1/18** (2006.01)

(21) Application number: **12006291.4**

(22) Date of filing: **06.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.02.2012 US 201213398440**

(71) Applicant: **Broadcom Corporation**
**Irvine, CA 92617 (US)**

(72) Inventors:
• **Shubhakoti, Srikanth**
**Milpitas, CA 95035 (US)**

• **Xie, Hongyu**
**San Diego, CA 92130 (US)**
• **Jeon, Hyun-Gyu**
**Pleasanton, CA 94566 (US)**
• **Lu, Gang**
**Pleasanton, CA 94566 (US)**

(74) Representative: **Jehle, Volker Armin**
**Bosch Jehle Patentanwaltsgesellschaft mbH**
**Flüggenstrasse 13**
**80639 München (DE)**

(54) **Dynamic Buffer Management in High-Throughput Wireless Systems**

(57)   Dynamic buffer management for wireless communication systems facilitates enhanced throughput. The dynamic buffer management reduces buffer allocation for the current service period (SP) near the end of the current service period, and allocates the freed buffer space to one or more subsequent service periods before they begin. As a result, the host may begin to transfer data for those subsequent service periods in advance, so that data is immediately available to send when the subsequent service periods begin.

Figure 5

**Description**

**1. Technical Field.**

This disclosure relates to communication protocols. In particular, this disclosure relates to buffer management for wireless communication systems.

**2. Background.**

Continual development and rapid improvement in wireless communications technology have lead the way to increased data rates and extensive wireless functionality across many different environments, including the home and business environments. These developments and improvements have been driven in part by the widespread adoption of digital media, including high definition video, photos, and music. The most recent developments in wireless connectivity promise new functionality and data rates far exceeding rates that the 802.11 n and the 802.11TGac standards provide. These recent developments include the Wireless Gigabit Alliance (WiGig) and 802.11TGad 60 GHz wireless specifications.

The 60Ghz specifications provides data transmission rates of up to 7 Gbps in a single stream, which is more than 10 times faster than the highest data rate that the 802.11 n multiple input multiple output (MIMO) standard supports. Another benefit of the 60 GHz specifications is that devices in the 60 GHz ecosystem will have the bandwidth to wirelessly communicate significant amounts of information without performance compromises, thereby eliminating the current need for tangles of cables to physically connect devices. WiGig compliant devices may, as examples, provide wireless docking station capability and wirelessly stream high definition video content directly from a Blu-Ray player to a TV with little or no compression required.

Improvements in buffer management are needed for such wireless communication systems, particularly to improve throughput for video, audio, and other types of streams, and more particularly for those streams that have not been guaranteed a particular Quality of Service (QoS).

**BRIEF SUMMARY OF THE INVENTION**

According to an aspect, a method for dynamic buffer management comprises:

monitoring a characteristic of a current transmit period supported by a current buffer allocation;
determining to reduce the current buffer allocation during the current transmit period, and in response:

determining a reduction to the current buffer allocation;
reducing the current buffer allocation by the reduction; and
increasing a subsequent buffer allocation for a subsequent transmit period using at least a part of the reduction in the current buffer allocation, prior to a starting time of the subsequent transmit period.

Advantageously, monitoring a characteristic comprises:

monitoring remaining time of the current transmit period.

Advantageously, monitoring a characteristic comprises:

monitoring remaining time of the current transmit period and determining a maximum amount of data that can be transferred in the remaining time.

Advantageously, determining a reduction in the current buffer allocation comprises: determining whether the maximum amount of data that can be transferred in the remaining time is less than the current buffer allocation.

Advantageously, determining a reduction in the current buffer allocation comprises:

determining that the maximum amount of data that can be transferred in the remaining time is less than the current buffer allocation, and in response:

determining the reduction so that the current buffer allocation, after reduction, is no greater than the maximum amount of data that can be transferred in the remaining time.

Advantageously:

determining to reduce the current buffer allocation during the current transmit period occurs when an acknowledgement is received for previously transmitted data or a response timeout occurs.

Advantageously, the method further comprises:

when the current transmit period ends, flushing selected data in the current buffer allocation; and notifying a host that the data was flushed.

According to an aspect, a system comprises:

a transmitter in a source station operable to transmit during a current transmit period to a destination station; and transmit control logic in the source station and in communication with the transmitter, the transmit control logic operable to, when executed:

monitor a characteristic of a current transmit period supported by a current buffer allocation; determine to reduce the current buffer allocation during the current transmit period, and in response:

determine a reduction to the current buffer allocation; reduce the current buffer allocation by the reduction; and increase a subsequent buffer allocation for a subsequent transmit period using at least a part of the reduction in the current buffer allocation, prior to a starting time of the subsequent transmit period.

Advantageously, the transmit control logic is operable to:

monitor remaining time of the current transmit period.

Advantageously, the characteristic comprises:

remaining time of the current transmit period; and a maximum amount of data that can be transferred in the remaining time.

Advantageously, the transmit control logic is operable to:

determine whether the maximum amount of data that can be transferred in the remaining time is less than the current buffer allocation.

Advantageously, the transmit control logic is operable to:

determine that the maximum amount of data that can be transferred in the remaining time is less than the current buffer allocation, and in response:

determine the reduction so that the current buffer allocation, after reduction, is no greater than the maximum amount of data that can be transferred in the remaining time.

Advantageously, the transmit control logic:

determines to reduce the current buffer allocation during the current transmit period when an acknowledgement is received for previously transmitted data or a response timeout occurs.

Advantageously, the transmit control logic is further operable to:

when the current transmit period ends, flush selected data in the current buffer allocation; and notifying a host that the data was flushed.

According to an aspect, a transmit control system comprises:

a system memory comprising:

a current buffer allocation for a current transmit period; and
a subsequent buffer allocation for a subsequent transmit period;

a transmit buffer manager in communication with the system memory, the transmit buffer manager operable to:

monitor a characteristic of the current transmit period;
in response to monitoring the characteristic, determine to reduce the current buffer allocation during the current transmit period, and in response:

determine a reduction to the current buffer allocation;
reduce the current buffer allocation by the reduction; and
increase the subsequent buffer allocation for the subsequent transmit period using at least a part of the reduction in the current buffer allocation, prior to a starting time of the subsequent transmit period.

Advantageously:

the subsequent buffer allocation comprises a predetermined minimum buffer allocation prior to the starting time; and
the current buffer allocation comprises a predetermined maximum buffer allocation available for the current transmit period.

Advantageously, the characteristic comprises:

remaining time of the current transmit period.

Advantageously, the characteristic comprise:

remaining time of the current transmit period; and
a maximum amount of data that can be transferred in the remaining time.

Advantageously, the transmit buffer manager is operable to:

determine that the maximum amount of data that can be transferred in the remaining time is less than the current buffer allocation, and in response:

determine the reduction so that the current buffer allocation, after reduction, is no greater than the maximum amount of data that can be transferred in the remaining time.

Advantageously, the transmit buffer manager is further operable to:

determine to reduce the current buffer allocation during the current transmit period in response to receiving an acknowledgement for previously transmitted data or a response timeout occurs.

## BRIEF DESCRIPTION OF THE DRAWINGS

Figure 1 shows an environment in which wireless stations communicate with one another.
Figure 2 shows an example in which a home media server requests service periods during which to stream various types of content to multiple destination stations using different traffic streams.
Figure 3 is a communication diagram illustrating an example of communication from the home media server to multiple different destination stations during different service periods.
Figure 4 shows an example of transmit control logic.
Figure 5 shows buffer allocation logic.
Figure 6 shows system simulation timing diagrams.
Figure 7 shows an example simulation result highlighting comparison in throughput.
Figure 8 shows an example simulation result highlighting comparison in throughput when the RF throughput is 7.040 Gbps.
Figure 9 shows an example simulation result highlighting comparison in throughput when the RF throughput is 4.620 Gbps.

Figure 10 shows a station that includes buffer allocation logic.

## DETAILED DESCRIPTION

This description relates to wireless communication under standards such as the IEEE 802.11 standards or the WiGig standards, including the 60 GHz wireless specification promoted by the Wireless Gigabit Alliance and the IEEE 802.11TGad standard. Accordingly, the discussion below makes reference to Service Periods (SPs), such as those defined by the WiGig standard. During the SPs, a source station will communicate, potentially, with multiple destination stations. The techniques described are not limited to WiGig SPs, however, and instead are applicable to any wireless communication protocol that provides for allocations of channel capacity to stations.

The stations may take many different forms. As examples, the stations may be cell phones, smart phones, laptop computers, personal data assistants, pocket computers, tablet computers, portable email devices, or people or animals equipped with transmitters. Additional examples of stations include televisions, stereo equipment such as amplifiers, pre-amplifiers, and tuners, home media devices such as compact disc (CD) / digital versatile disc (DVD) players, portable MP3 players, high definition (e.g., Blu-Ray (TM) or DVD audio) media players, or home media servers. Other examples of stations include musical instruments, microphones, climate control systems, intrusion alarms, audio/video surveillance or security equipment, video games, network attached storage, network routers and gateways, pet tracking collars, or other devices.

Stations may be found in virtually any context, including the home, business, public spaces, or automobile. Thus, as additional examples, stations may further include automobile audio head ends or DVD players, satellite music transceivers, noise cancellation systems, voice recognition systems, climate control systems, navigation systems, alarm systems, engine computer systems, or other devices.

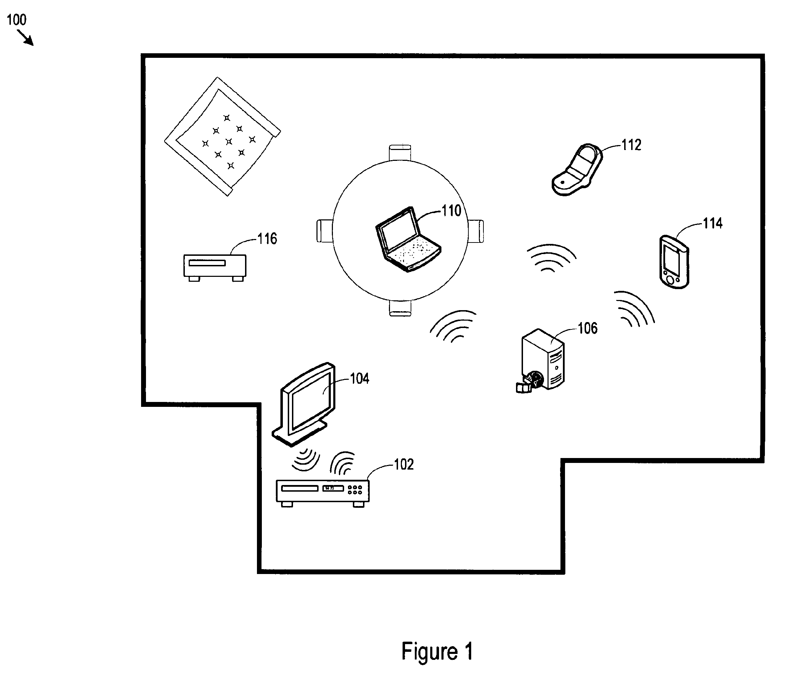

Figure 1 shows one example of an environment 100 in which stations communicate with one another. In this example, the environment 100 is a room in a home. For example, the environment 100 includes a media player 102 (e.g., a Blu-Ray (TM) player) that streams high definition video and audio content to a high definition liquid crystal display (LCD) television (TV) 104. Similarly, a home media server 106 with a wireless network interface streams audio (e.g., MP3 content) and video (e.g., MP4, AVI, or MPEG content) to multiple destination stations in the environment 100, including the laptop 110, the smartphone 112, and the portable gaming system 114. A network scheduler 116 provides network management functionality in support of whichever standard is in use in the environment 100, such as by scheduling SPs for the stations under the WiGig standard. Typically, one of the stations in the wireless network assumes the role of network scheduler.

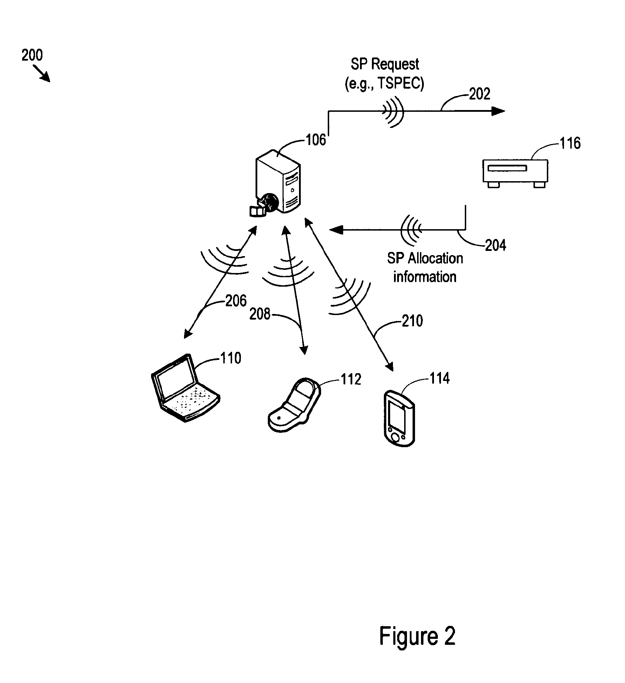

As shown in Figure 2, a station in the network sends communication requirements to the network scheduler 116 by sending, as one example, a service request containing a Traffic Specification element (TSPEC) 202 to the scheduler 116. The TSPEC may take the form of a set of numeric parameters, or may take other forms in other implementations. Depending on the wireless channel time availability, the network scheduler 116 may reject or accept the received TSPEC. Once a TSPEC from a station is accepted, the network scheduler 116 will be responsible for scheduling enough wireless channel time, for example in the form of SP(s), to meet the communication requirements specified in the accepted TSPEC. The network scheduler 116 communicates the scheduled channel time allocation information 204, such as SPs, to all stations currently associated with the network ahead of time. Normally, a SP is associated with a source station, one or more destination station(s), and is characterized by a starting time and duration. The SP allocations involving multiple destination stations may be created by the network scheduler 116 through combining multiple TSPEC requests issued by the future source station and/or the future destination station(s). One reason for doing so is to leave sufficient fine-grained scheduling flexibility to the future source station so that it can adjust the sequence and duration of communicating each of the destination stations based on the dynamic needs. During a SP, the SP owner or the source station is entitled to a specific window of time (as specified by the SP duration) to transmit information without other stations attempting to access the channel. Since the SP allocation information is communicated to all stations before the SP starts, each station (including the destination stations that the source station will communicate with) knows ahead of time about the SPs that are scheduled. Therefore, if a destination station knows when to listen for communications from the SP, and, if the destination station uses a directional antenna during the SP, the destination station can tune its receive antenna to the source station at SP's start time.

As noted above, a requesting station may specify the source station for any requested SP allocation using a source station identifier (e.g., a unicast source address), and may specify one or more destination stations. A multiple destination station identifier in the request may specify the multiple destination stations. The multiple destination station identifier may be, as examples, a broadcast identifier or multicast identifier (e.g., an identifier established for a predefined group of stations among all of the stations in the network). In other implementations, the requesting station may specify multiple destination stations with individual identifiers for the destination stations.

For the purposes of illustration, Figure 2 shows the home media server 106 requesting SPs during which to stream various types of content to multiple destination stations using different traffic streams 206, 208, and 210 in the environment 100. In this example, the multiple destination stations include the laptop 110, the smartphone 112, and the portable gaming system 114. The home media server 106 may, for example, transmit the traffic streams 206 - 210 during the different SPs that the home media server 106 requested from the network scheduler 116. As will be explained in detail below, the transmit control logic within the home media server 106 will dynamically allocate buffer memory for the SPs in a manner that facilitates increased throughput to the destination stations.

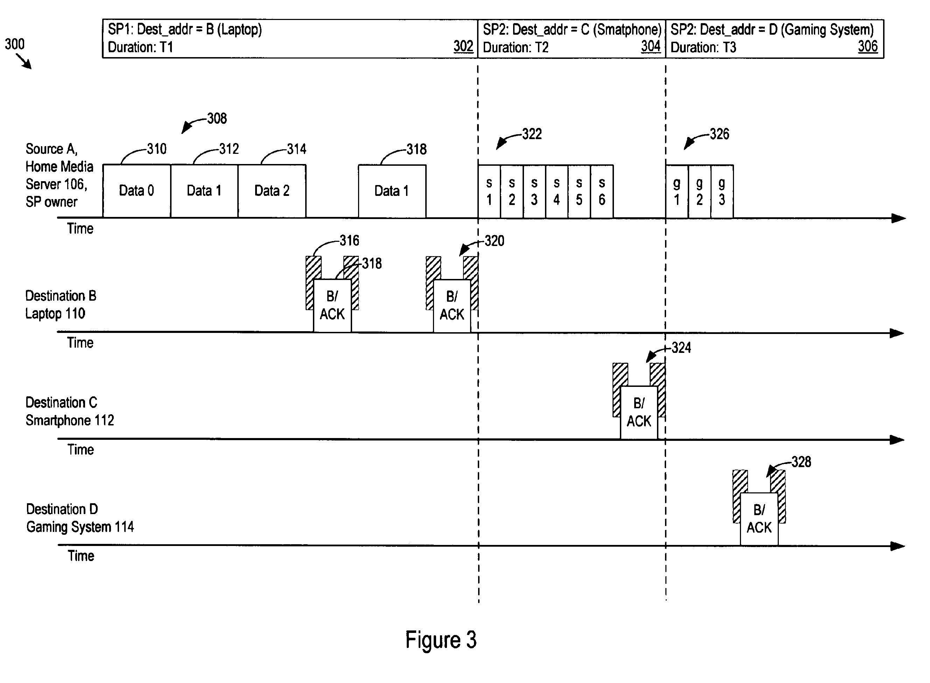

Figure 3 is a communication diagram 300 illustrating an example of communication from the home media server 106 as a source station to the laptop 110, the smartphone 112, and the portable gaming system 114 as destination stations. Communication to the laptop 110 occurs in the first service period SP1 302 (and other SPs possibly later scheduled). Communication to the smartphone 112 occurs in the subsequent second service period SP2 304 (and other SPs possibly later scheduled). Communication to the gaming system 116 occurs in the subsequent third service period SP3 306 (and other SPs possibly later scheduled).

The home media server 106 (or any other source station) may transmit data in one or more data frames or aggregations of data frames, such A-MPDU or A-MSDU aggregations. In that regard, the home media server 106 may, for example, organize and aggregate the data frames into media access control (MAC) level protocol data units (MPDUs) carried by Physical (PHY) layer protocol data units (PPDUs). In SP1, the home media server 106 transmits an aggregation 308 of data frames 310, 312, and 314 to the laptop 110.

During SP1 302, the home media server 106 sends the aggregation 308 to the laptop 110. Then, within the required interframe spacing 316, the laptop 110 block acknowledges, with the B/ACK frame 318, receipt of the data frames successfully received. In this example, the B/ACK 316 acknowledges successful receipt of data frames 310 and 314, but indicates reception failure for data frame 312. The home media server 106 retransmits the data frame 312 as the data frame 318. The laptop 110 now successfully receives the data frame 312 and sends an acknowledgement 320.

During SP2 304, the home media server 106 communicates the data frames 322 to the smartphone 112 and receives the ACK 324 from the smartphone. In SP3 306, the home media server 106 communicates the data frames 326 to the gaming system 114, and receives the ACK 328. Each of the SPs 302 - 306 is supported within the transmit control logic in the source station by a buffer allocation. The buffer allocation provides memory space in which to store the data that the source station will transmit to the destination station. The transmit control logic dynamically adjusts the buffer allocation to facilitate improved throughput between the source station and the destination stations.

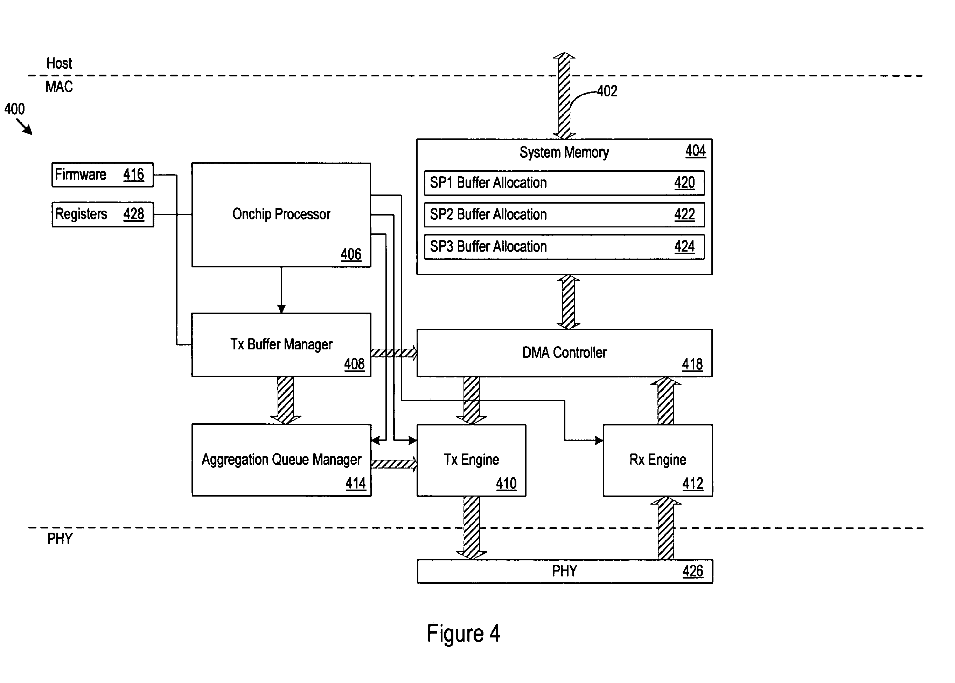

Figure 4 shows one example of the transmit control logic 400. The transmit control logic (TCL) 400 may be implemented in many different ways, such as in a MAC / PHY System on a Chip (SoC). The TCL 400 connects to a source of data to be sent to the destination stations. In Figure 4, the source of data is shown as the host, and a transport layer connection 402 connects the TCL 400 to the host. The transport layer connection 402 may be, for example, a high speed data, address, and control bus, such as a Peripheral Component Interconnect Express (PCIe) bus. The TCL 400 may buffer host data in the system memory 404. In part, this helps alleviate timing variability in data delivery over the transport layer connection 402.

The TCL 400 includes, in this example, the onchip processor 406 that oversees the operation of a transmit (Tx) buffer manager 408, Tx engine 410, receive (Rx) engine 412, and an aggregation queue manager 414. The aggregation queue manager 414 may support hardware accelerated aggregation of frames into A-MPDUs, for example. The Tx engine 410 may include logic that, as examples, receives data for transmission from the DMA controller 418, packages the data into frames and that encodes, modulates, and transmits the frames onto the physical (PHY) layer 426 (e.g., an air interface when the stations are wireless stations). Similarly, the Rx engine 412 may include logic that, as examples, receives signals from the PHY layer 426, demodulates, decodes, and unpacks data in received frames, and passes the received data to the DMA controller 418 for storage in the system memory 404.

The onchip processor 406 may execute control firmware 416 or other program instructions that are stored in a firmware memory or other memory. A direct memory access (DMA) controller 418 provides a high speed and efficient data transfer mechanism between the system memory 404, the Tx engine 410 and the Rx engine 412. The system memory 404 need not be on the SoC, but may instead be off chip and connected to the DMA controller 416 or other logic in the TCL 400 through a bus interface that preferably provides a dedicated memory interface so that the TCL 400 can obtain the data needed for transmission to the destination stations without exposure to the variability in the transport layer connection 402. In one implementation, the system memory is 1.5 megabytes in size, but the size may vary widely depending on the implementation.

The Tx buffer manager 408 may dynamically allocate and deallocate memory buffers within the system memory to support specific SPs. In some implementations, the Tx buffer manager 408 creates and manages pointers to track the buffer allocations in the system memory 404, but the management may be accomplished in other ways. The Tx buffer manager 408 may be configured to allocate up to a predetermined maximum buffer allocation for an SP. The predetermined maximum may vary based on characteristics of the SP, the traffic that the SP is expected to support, the destination station for the SP, or based on other factors. As examples, the predetermined maximum buffer allocation may be 128 KB or 256 KB. Figure 4 shows three buffer allocations for the SPs illustrated in Figure 3: the SP1 buffer allocation 420, the SP2 buffer allocation 422, and the SP3 buffer allocation 424.

The Tx buffer manager 408 may not only create the buffer allocations in the system memory 404, but may also dynamically modify the buffer allocations during SPs to facilitate improvements in throughput. As will be explained in more detail below, the onchip processor 406 may monitor the remaining duration of a SP, by, as examples, reading a timing register in a set of status registers 428, by running and monitoring a timer or counter, or in other ways. As the SP approaches its end, the Tx buffer manager 408 may reduce the buffer allocation for the SP, and allocate the freed memory to a subsequent SP that has not yet started. The Tx buffer manager 408 may maintain a predetermined minimum buffer allocation for the current SP. Thus, the host may communicate data to the TCL 400 over the transport layer connection 402 for the subsequent SP in advance of the subsequent SP, and moreover may have additional buffer memory in which to store the data for the subsequent SP than might otherwise be available. As a result, when the subsequent SP begins, additional data is immediately available to transmit in the subsequent SP, leading to increased throughput.

Furthermore, the Tx buffer manager 408 can create and dynamically manage buffer allocations for destination stations that may currently be in a power saving mode. In other words, because the source station knows the SP schedule, the source station knows when data transmission may later begin to any particular destination station. Even when the destination station is currently in power saving mode, the destination station will wake up on schedule to receive data. The Tx buffer manager 408 may therefore allocate and dynamically adjust buffer allocations for stations currently in power saving mode to buffer in advance (or provide additional buffer) for the data that will be sent to the destination station after it awakens.

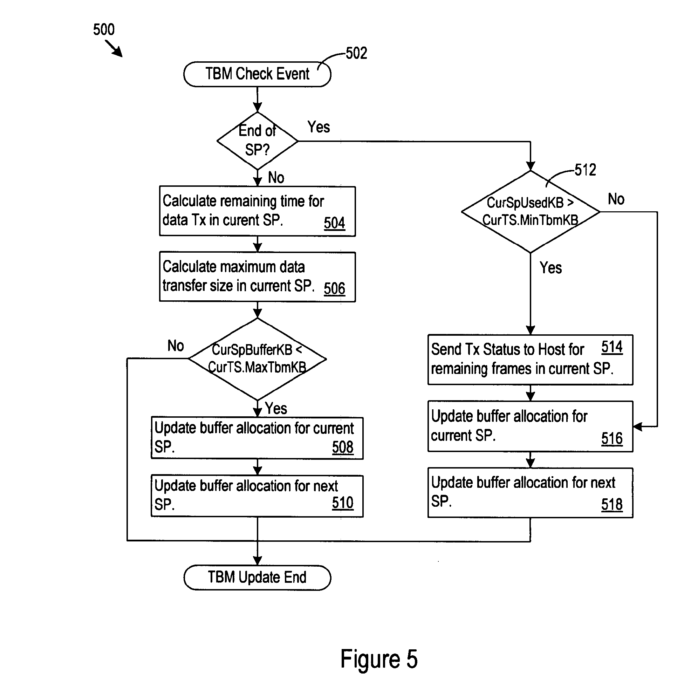

Figure 5 shows an example of the buffer allocation logic (BAL) 500 that the Tx buffer manager 408 may implement to dynamically adjust buffer allocations. The BAL 500 may be implemented in hardware, software (e.g., firmware stored in a firmware memory in communication with the Tx buffer manager 408), or as a combination of hardware and software. The BAL 500 flow starts with a Tx buffer manager event check 502. The event check 502 may occur at any desired interval or in response to any desired conditions. As examples, the event check 502 may occur every clock cycle, may occur when a B/ACK is received from a destination station, may occur when bit error rates have risen more than a threshold amount, may occur every 1 ms, 10ms, or on some other schedule, when requested by another process or logic block (e.g., when requested by the onchip processor 406), or at any other time.

The BAL 500 determines whether the current SP has ended. If not, the BAL determines the remaining time for transmitting data in the current SP (504). As one example, the BAL may determine the remaining time in microseconds (US) as:

$$RemDataTimeUS = TSF.RemSpDurUS - SIFS\_US - ACK\_BA\_Time\_US;$$

where TSF.RemSpDurUS is the remaining duration in microseconds of the SP as a whole, SIFS_US is the short interframe spacing time in microseconds, and ACK_BA_Time is the time typically needed to receive and process a B/ACK from the destination station in microseconds.

The BAL 500 may also determine the maximum amount of data that could be transmitted given the remaining time for transmission in the current SP (506). The BAL 500 may determine the maximum amount as:

$$CurSpBufferKB = ceil\ (RemDataTimeUS * CurRfThroughput / (1024 * 8 * factor));$$

where CurSpBufferKB is the maximum amount of data that could be transferred given the remaining SP transmit duration, CurRfThroughput is the current data transmission rate over the RF interface in bits per microsecond, 1 / (1024 * 8) converts to KBs per microsecond, and 'factor' is a variable tuning parameter that may be used to increase or decrease the CurSpBufferKB result to accommodate for uncertainties or to provide a variable guard around the calculation.

The BAL 500 determines when CurSpBufferKB is less than the current maximum buffer size allocated to the traffic stream active in the current SP. The current maximum buffer size is shown in Figure 5 as CurTS.MaxTbmKB, and, as noted above, may be 128KB or 256KB or another size. In other words, the BAL 500 determines whether the current maximum buffer size is greater than the amount of data that could possibly be transmitted to the destination station, given the remaining SP duration and data rate.

When the current maximum buffer size exceeds the amount of data that could be transmitted, then the BAL 500 dynamically updates the buffer allocation for the current SP (508). In one implementation, the BAL 500 frees a specific amount of memory by reducing the buffer allocation currently given to the SP. For example:

$$FreedTbmKB = CurTS.MaxTbmKB - CurSpBufferKB;$$

In other words, the BAL 500 calculates an amount of buffer allocation to free as the excess in the current maximum buffer allocation above the maximum amount of data that could possibly be transmitted. The BAL 500 then reduces the current buffer allocation for the traffic stream in the SP, e.g., to no be no larger than the maximum amount of data that could possibly be transmitted given the remaining SP time:

$$TBM[CurTS].MaxTbmKB = CurSpBufferKB;$$

The BAL 500 also updates the buffer allocation for a subsequent SP (e.g., the next SP) (510). For example:

$$TBM[NextTS].MaxTbmKB = Min(FreedTbmKB, NextTS.MaxTbmKB);$$

In other words, the BAL 500 sets the buffer allocation for the next SP (more specifically, for the next traffic stream TS in the next SP), to the minimum of: 1) the amount of buffer memory freed from the current SP and 2) the maximum buffer size that could be assigned for the next SP (more specifically, the maximum buffer size for the next traffic stream in the next SP). In general, the buffer allocation updates may be made for any subsequent SP or TS, not only the next SP or TS. The BAL 500 may also increment the buffer size for a subsequent SP by the amount of buffer memory freed from the current SP. Therefore, a subsequent SP has buffer memory allocated to it, or has additional buffer memory allocated to it, in the amount of buffer memory freed from the current SP. As a result, the host may begin to transfer data to the TCL 400 for a subsequent SP, or transfer additional data to the TCL 400 for the subsequent SP in advance of the subsequent SP. Additional data is therefore ready for transmission in the TCL 400 immediately when the subsequent SP starts, leading to increase throughput for the subsequent SP.

With respect again to Figure 5 the BAL 500 determines whether the current SP has ended. When an SP ends, its buffer allocation may be reduced to zero, or to some other minimum level represented by the variable CurTS.MinTbmKB. Accordingly, the BAL 500 determines whether the amount of data held in the buffer for the current SP exceeds the minimum buffer allocation for the SP which has ended (512). If so, then the BAL 500 may send to the host a transmit status message (514). The transmit status message may inform the host that the certain data, e.g., certain frames, could not be transmitted in the current SP. The host may then retransmit those frames to the TCL 400 for transmission in a subsequent SP.

The BAL 500 also updates the buffer allocation for the SP which has ended (516). For example, the BAL 500 may set the buffer allocation for the SP which has ended to a minimum level:

$$TBM[CurTS].MaxTbmKB = CurTS.MinTbmKB;$$

In preparation for the start of the subsequent SP, the BAL 500 may also set the buffer allocation for the TS active in the next SP that is about to start to a predetermined maximum buffer size, e.g., 128KB or 256KB, which may be different or the same as the maximum buffer size for the TS in the SP that has just ended (518):

$$TBM[NextTS].MaxTbmKB = NextTS.MaxTbmKB;$$

To summarize:

CurTS.MaxTbmKB: represents maximum buffer size assignable to Traffic Stream active in current SP.

NextTS.MaxTbmKB: represents maximum buffer size assignable to Traffic stream active in next SP.

TBM[CurTS].MaxTbmKB = represents the maximum buffer usable by the current active TS in the current SP.

TBM[NextTS].MaxTbmKB = represents the maximum buffer usable by the TS that will be active in the next SP.

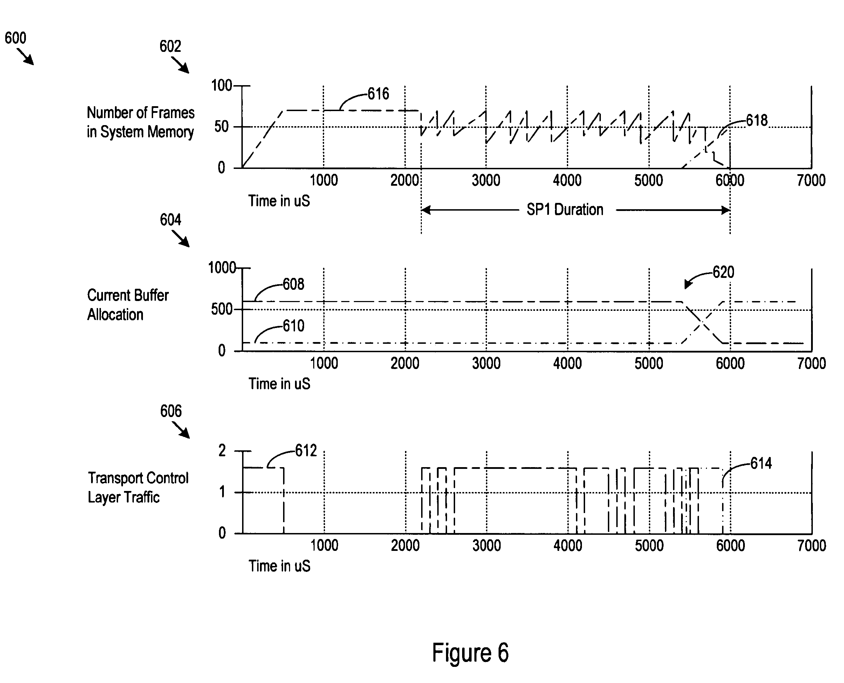

Figure 6 shows system simulation timing diagrams 600. The timing diagrams 600 assume a SP duration of about 3800 microseconds (uS), but a SP may in general have any duration. The timing diagram 602 illustrates the number of frames in system memory 404 over time. The timing diagram 604 illustrates the current buffer allocation for the current SP and subsequent SP. The timing diagram 606 illustrates the amount of transport control layer traffic over time.

Diagram 604 shows the SP1 buffer allocation 608 for the initial and current SP, SP1, and the SP2 buffer allocation 610 for the subsequent SP, SP2. The buffer allocation 608 shows that SP1 has been allocated, initially, a maximum amount of buffer (e.g., 128KB), while the buffer allocation 610 shows that the subsequent SP2 has been allocated only some predetermined minimal amount of buffer from the system memory 404. The SP1 transport layer activity 612 shows that the host is using the bus to send data to the TCL 400 in preparation for SP1. Little to no SP2 transport layer activity 614 occurs for SP2 until later, as will be explained. The initial flow of data from the host to the TCL 400 increases the number of SP1 frames 616 in system memory 404. The number of SP2 frames 618 in system memory remains minimal to none until later, as will also be explained.

In Figure 6, SP1 is assumed to start at about 2200 uS. As frames are retrieved from system memory 404 by the DMA controller 418, they are prepared and sent onto the PHY layer 426 by the Tx engine 410. This activity reduces the amount of frames in system memory 404 for SP1 temporarily, and the host replenishes the data, resulting in a variable number of frames being in system memory 404, as illustrated by the number of SP1 frames 616.

The BAL 500 monitors the remaining duration of SP1. At the time indicated by reference numeral 620 (about 5500 uS in this example), the BAL 500 begins to reduce the buffer allocation for SP1, as shown by the decreasing SP1 buffer allocation 608. The reduction may proceed as described in detail above with respect to Figure 5. In addition, the BAL 500 begins to increase the buffer allocation for SP2, as shown by the SP2 buffer allocation 610, even though SP2 has not yet begun.

SP2 will not begin until approximately time 6000 uS. Between 5500 uS and 6000 uS, however, note that the host communicates data for SP2 to the TCL 400 over the transport control layer 402. This communication activity is shown by the SP2 transport layer activity 614, and by the increase in the number of frames in system memory 404 for SP2, as shown by the number of SP2 frames 618. As a result, when SP2 begins, the system memory 404 already has stored more data than it ordinarily would have in advance for SP2. Thus, the Tx engine 410 may send more data more quickly for SP2, resulting in improvements in throughput.

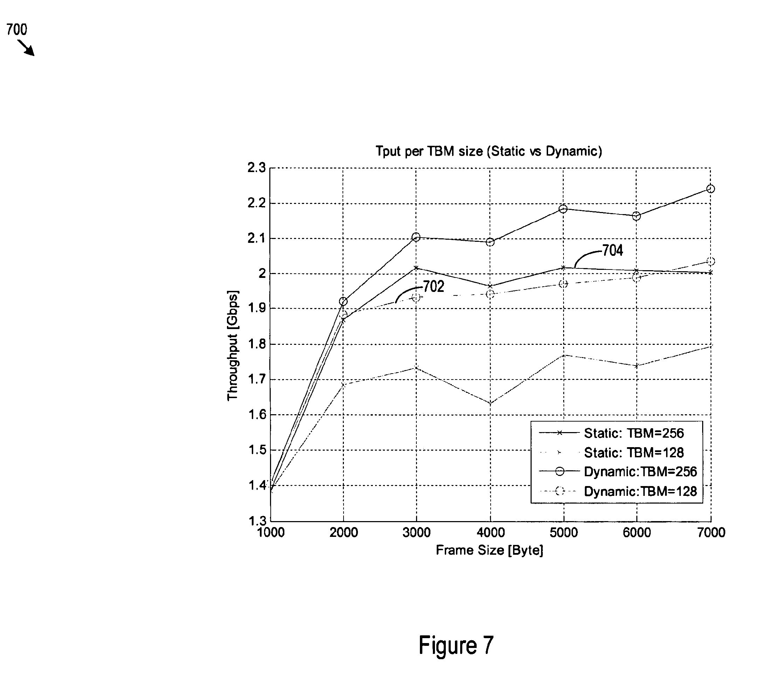

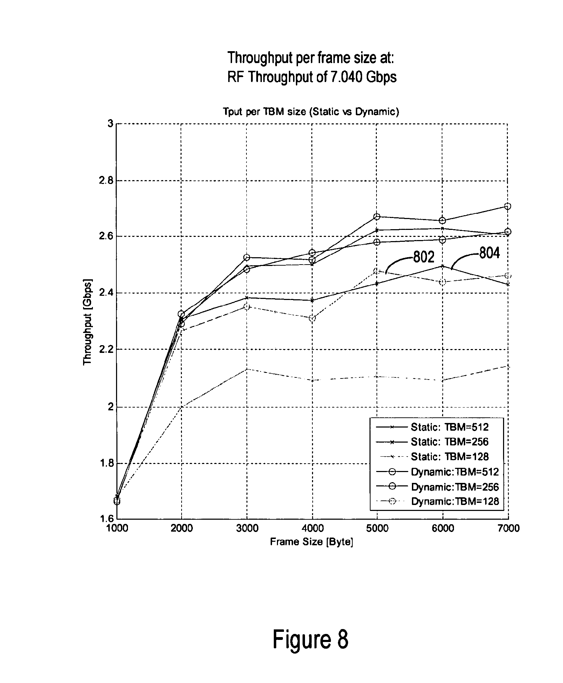

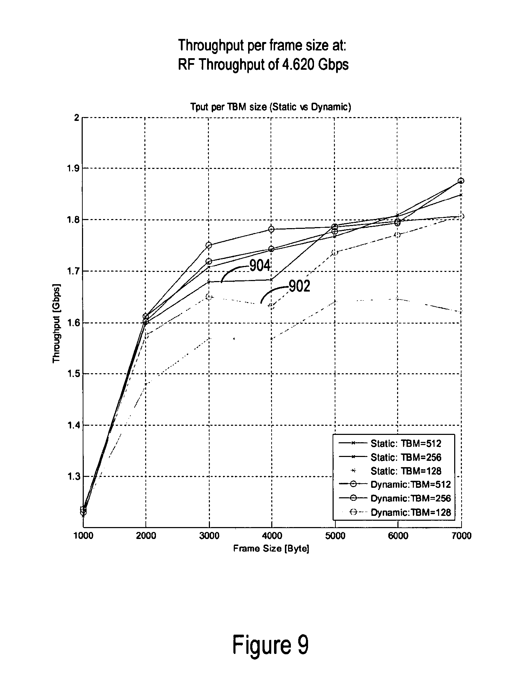

Similar levels of throughput may be achieved using only a 128KB maximum buffer allocation and the dynamic buffer adjustment described above, compared to a static 256KB buffer allocation. Figure 7 shows an example simulation result 700 highlighting the comparison in throughput. Curve 702 shows the dynamic 128KB throughput, while curve 704 shows the static 256KB throughput. Figure 8 shows a simulation result 800 showing similar results at an RF throughput of 7.040 Gbps for the dynamic 128KB scenario 802, and the static 256 KB scenario 804. Figure 9 shows a simulation result 900 showing similar results at an RF throughput of 4.620 Gbps for the dynamic 128KB scenario 902, and the static 256 KB scenario 904.

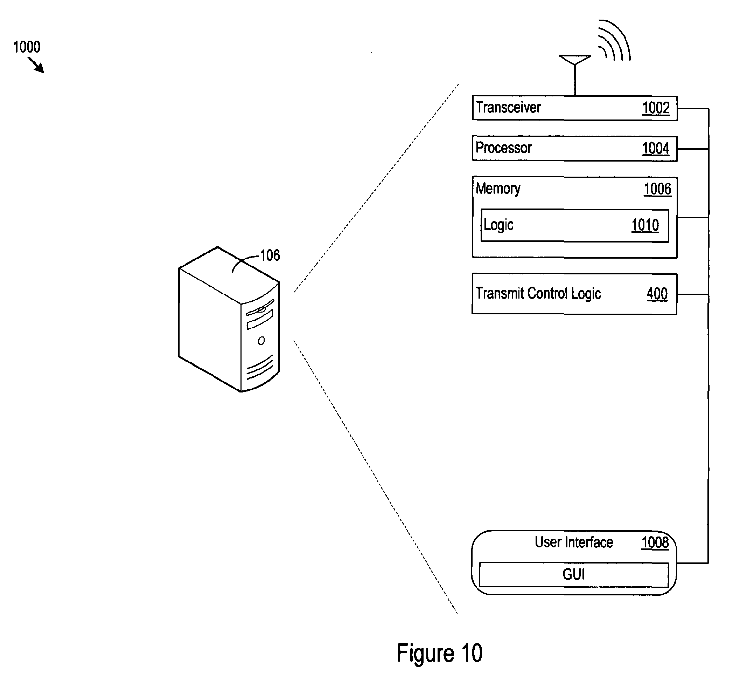

Figure 10 shows an example implementation of a station 1000, in this instance the home media server 106. The station 1000 includes a transceiver 1002, one or more host processors 1004, host memory 1006, and a user interface 1008. The transceiver 1002 may be a wireless transceiver that provides modulation /demodulation, amplifiers, analog to digital and digital to analog converters and/or other logic for transmitting and receiving through one or more antennas, or through a physical (e.g., wireline) medium. The transmitted and received signals may adhere to any of a diverse array of formats, protocols, modulations, frequency channels, bit rates, and encodings that presently or in the future may support WiGig service periods or similar types of dedicated channel allocations, such as the GHz WiGig/802.11TGad specifications.

The host processor 1004 executes the logic 1010. The logic 1010 may include an operating system, application programs, or other logic. The host processor 1004 is in communication with the TCL 400. As described above, the TCL 400 may handle transmission and reception of data over the physical layer 426. To that end, the TCL 400 receives data for transmission from the host processor 1004 and host memory 1006, and provides received data to the host processor 1004 and host memory 1006. The TCL 400 executes dynamic buffer allocation logic as described above. The TCL 400 may take the form of a dedicated ASIC, SoC, or other circuitry in the station 100 that interfaces with the host processor 1004 to transmit and receive data over the physical layer 426. As a result, the station 1000 may experience improved throughput for its communications to destination stations. The station 1000 may take many forms, as noted above, and is not limited to a home media server 106.

The dynamic buffer management noted above facilitates increased throughput for video, audio, and other types of streams, whether communicated over a wired or wireless physical medium. The dynamic buffer management may also provide a level of throughput, using a smaller maximum buffer allocation, that is close to or that exceeds the level of throughput using a larger fixed buffer allocation. The dynamic buffer management particularly facilitates throughput increases for those streams that have not been guaranteed a particular Quality of Service (QoS).

The methods, stations, and logic described above may be implemented in many different ways in many different combinations of hardware, software or both hardware and software. For example, all or parts of the station may include circuitry in one or more controllers, microprocessors, or application specific integrated circuits (ASICs), or may be implemented with discrete logic or components, or a combination of other types of circuitry. All or part of the logic may be implemented as instructions for execution by a processor, controller, or other processing device and may be stored in a machine-readable or computer-readable medium such as flash memory, random access memory (RAM) or read only memory (ROM), flash memory, erasable programmable read only memory (EPROM) or other machine-readable medium such as a compact disc read only memory (CDROM), or magnetic or optical disk.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for dynamic buffer management comprising:

   monitoring a characteristic of a current transmit period supported by a current buffer allocation;
   determining to reduce the current buffer allocation during the current transmit period,
   and in response:

   determining a reduction to the current buffer allocation;
   reducing the current buffer allocation by the reduction; and
   increasing a subsequent buffer allocation for a subsequent transmit period using at least a part of the reduction in the current buffer allocation, prior to a starting time of the subsequent transmit period.

2. The method of claim 1, where monitoring a characteristic comprises:

   monitoring remaining time of the current transmit period.

3. The method of claim 1, where monitoring a characteristic comprises:

   monitoring remaining time of the current transmit period and determining a maximum amount of data that can be transferred in the remaining time.

4. The method of claim 3, where determining a reduction in the current buffer allocation comprises:

   determining whether the maximum amount of data that can be transferred in the remaining time is less than the current buffer allocation.

5. The method of claim 4, where determining a reduction in the current buffer allocation comprises:

   determining that the maximum amount of data that can be transferred in the remaining time is less than the current buffer allocation, and in response:

   determining the reduction so that the current buffer allocation, after reduction, is no greater than the maximum amount of data that can be transferred in the remaining time.

6. The method of claim 1, where:

   determining to reduce the current buffer allocation during the current transmit period occurs when an acknowledgement is received for previously transmitted data or a response timeout occurs.

7. The method of claim 1, further comprising:

when the current transmit period ends, flushing selected data in the current buffer allocation; and
notifying a host that the data was flushed.

**8.** A system comprising:

a transmitter in a source station operable to transmit during a current transmit period to a destination station; and
transmit control logic in the source station and in communication with the transmitter,
the transmit control logic operable to, when executed:

monitor a characteristic of a current transmit period supported by a current buffer allocation;
determine to reduce the current buffer allocation during the current transmit period, and in response:

determine a reduction to the current buffer allocation;
reduce the current buffer allocation by the reduction; and
increase a subsequent buffer allocation for a subsequent transmit period using at least a part of the
reduction in the current buffer allocation, prior to a starting time of the subsequent transmit period.

**9.** The system of claim 8, where the transmit control logic is operable to:

monitor remaining time of the current transmit period.

**10.** The system of claim 8, where the characteristic comprises:

remaining time of the current transmit period; and
a maximum amount of data that can be transferred in the remaining time.

**11.** The system of claim 10, where the transmit control logic is operable to:

determine whether the maximum amount of data that can be transferred in the remaining time is less than the
current buffer allocation.

**12.** The system of claim 10, where the transmit control logic is operable to:

determine that the maximum amount of data that can be transferred in the remaining time is less than the current
buffer allocation, and in response:

determine the reduction so that the current buffer allocation, after reduction, is no greater than the maximum
amount of data that can be transferred in the remaining time.

**13.** The system of claim 8, where the transmit control logic:

determines to reduce the current buffer allocation during the current transmit period when an acknowledgement
is received for previously transmitted data or a response timeout occurs.

**14.** The system of claim 8, where the transmit control logic is further operable to:

when the current transmit period ends, flush selected data in the current buffer allocation; and
notifying a host that the data was flushed.

**15.** A transmit control system comprising:

a system memory comprising:

a current buffer allocation for a current transmit period; and
a subsequent buffer allocation for a subsequent transmit period;

a transmit buffer manager in communication with the system memory, the transmit buffer manager operable to:

monitor a characteristic of the current transmit period;

in response to monitoring the characteristic, determine to reduce the current buffer allocation during the current transmit period, and in response:

determine a reduction to the current buffer allocation;

reduce the current buffer allocation by the reduction; and

increase the subsequent buffer allocation for the subsequent transmit period using at least a part of the reduction in the current buffer allocation, prior to a starting time of the subsequent transmit period.

Figure 1

EP 2 629 446 A1

200

SP Request
(e.g., TSPEC)
202

106

116

204

SP Allocation
information

206

208

210

110

112

114

14

Figure 2

Figure 3

Figure 4

Figure 5

Figure 6

Figure 7

Figure 8

Figure 9

1000

| Transceiver | 1002 |

| Processor | 1004 |

| Memory | 1006 |
| Logic | 1010 |

| Transmit Control Logic | 400 |

106

| User Interface | 1008 |
| GUI | |

Figure 10

EP 2 629 446 A1

## EUROPEAN SEARCH REPORT

Application Number

EP 12 00 6291

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/310578 A1 (CONVERTINO GABRIELLA [IT] ET AL) 17 December 2009 (2009-12-17)<br>* paragraphs [0065] - [0089]; figures 2-4 *<br>* paragraphs [0097] - [0111]; figure 5 *<br>* paragraphs [0184] - [0192]; figure 12 * | 1-15 | INV.<br>H04L1/18 |
| A | US 2007/161364 A1 (SURINENI SHRAVAN K [US] ET AL) 12 July 2007 (2007-07-12)<br>* paragraphs [0036] - [0043]; figures 1,2 *<br>* paragraphs [0048] - [0052] * | 1-15 | |
| A | US 2005/152324 A1 (BENVENISTE MATHILDE [US]) 14 July 2005 (2005-07-14)<br>* paragraphs [0028] - [0054]; figures 1-3 * | 1-15 | |

| | |
|---|---|
| | TECHNICAL FIELDS SEARCHED (IPC) |
| | H04L |

The present search report has been drawn up for all claims

| Place of search | Date of completion of the search | Examiner |
|---|---|---|
| Munich | 7 May 2013 | Kreppel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT**
**ON EUROPEAN PATENT APPLICATION NO.**                 EP 12 00 6291

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2013

| Patent document cited in search report | Publication date | Patent family member(s) | | Publication date |
|---|---|---|---|---|
| US 2009310578 A1 | 17-12-2009 | EP | 2041921 A1 | 01-04-2009 |
| | | US | 2009310578 A1 | 17-12-2009 |
| | | WO | 2008010007 A1 | 24-01-2008 |
| US 2007161364 A1 | 12-07-2007 | EP | 1972115 A1 | 24-09-2008 |
| | | EP | 1983704 A1 | 22-10-2008 |
| | | EP | 1983705 A1 | 22-10-2008 |
| | | JP | 4875108 B2 | 15-02-2012 |
| | | JP | 2009523372 A | 18-06-2009 |
| | | JP | 2012050101 A | 08-03-2012 |
| | | KR | 20090003181 A | 09-01-2009 |
| | | US | 2007161364 A1 | 12-07-2007 |
| | | US | 2010315979 A1 | 16-12-2010 |
| | | WO | 2007082235 A1 | 19-07-2007 |
| US 2005152324 A1 | 14-07-2005 | EP | 1728400 A2 | 06-12-2006 |
| | | US | 2005152324 A1 | 14-07-2005 |
| | | US | 2009252135 A1 | 08-10-2009 |
| | | WO | 2005069806 A2 | 04-08-2005 |

EPO FORM P0459

For more details about this annex : see Official Journal of the European Patent Office, No. 12/82